# EUROPEAN PATENT APPLICATION

(11) **EP 4 726 244 A1**
(43) Date of publication of application: **15.04.2026**
(21) Application number: 23940741.4
(22) Date of filing: 08.06.2023
(51) Int. Cl.: F16L 27/10

(54) **PIPE CONNECTION TOOL AND PIPE CONNECTION METHOD USING SAME**

(71) Applicant: NOK Corporation, Minato-ku Tokyo 105-8585 (JP)
(72) Inventor: HAGIWARA Naoki, Makinohara-shi, Shizuoka 421-0532 (JP); IMAI Katsuma, Makinohara-shi, Shizuoka 421-0532 (JP); AIHARA Kazuya, Makinohara-shi, Shizuoka 421-0532 (JP); WATANABE Takeshi, Makinohara-shi, Shizuoka 421-0532 (JP); HOSEN Tatsuro, Makinohara-shi, Shizuoka 421-0532 (JP); OKAMURA Tetsuo, Makinohara-shi, Shizuoka 421-0532 (JP)
(74) Representative: Global IP Europe Patentanwaltskanzlei
(86) International application number: PCT/JP2023/021431
(87) International publication number: WO 2024/252643

(57) **Abstract**

A pipe connector (11) connecting two pipes is mainly configured of a cylindrical elastic body (21) made of rubber, and includes connection portions (22A, 22B) respectively fitted to the two pipes being provided at both ends of the pipe connector, and a diaphragm (23) being provided in a central portion thereof. A first reinforcing ring (31) is embedded in one connection portion (22A), and a second reinforcing ring (41) is embedded in the other connection portion (22B). The first reinforcing ring (31) has a first cylinder (32) and a first flange (33), and the second reinforcing ring (41) has a second cylinder (42) and a second flange (43). The first flange (33) receives the force of a jig in a direction from the other connection portion (22B) toward the one connection portion (22A), and the second flange (43) receives, on the outer periphery of the elastic body (21), the force of a jig in a direction from the one connection portion (22A) toward the other connection portion (22B).

## Description

### Technical Field

The present disclosure relates to a pipe connector and a pipe connection method using the same.

### Background Art

A pipe connector has been used in various places in various mechanical fields such as automobiles, general industrial machines, and construction machines. For example, in the field of the automobiles, the pipe connector is used as a joint of a cooling pipe of an electric vehicle or a joint of a turbo unit or an intercooler.

There has been disclosed in Japanese Unexamined Patent Application Publication No. 2019-007568 (Patent Document 1), a pipe connection structure which is interposed between two pipe flow paths (4) and (5) and which absorbs a misalignment between the two pipe flow paths and connects therebetween by a cylindrical member (1) formed in a cylindrical shape by a rubbery elastic material (refer to paragraphs [0024]-[0025] in Patent Document 1). The cylindrical member (1) has a shape in which one end (11) inserted into an opening end of one pipe flow path (4) and the other end (12) inserted into an opening end of the other pipe flow path (5) are integrally provided via a funnel-shaped bellows portion (refer to FIGS. 1, 2, 5, and 6 in Patent Document 1).

The one end (11) is fitted to an inner peripheral surface of the one pipe flow path (4). Therefore, one end-side seal (2) is provided on an outer peripheral surface of the one end (11) (refer to paragraphs [0029]-[0032] in Patent Document 1). The one end-side seal (2) is constituted of a hard embedded annular member (21) embedded in the one end (11), and a lip (22) swollen and formed on the outer peripheral surface of the one end (11).

The other end (12) is fitted to an outer peripheral surface of the other pipe flow path (5). Therefore, the other end-side seal (3) is provided on an inner peripheral surface of the other end (12). In the fifth embodiment disclosed in FIG. 5 by Patent Document 1, the other end-side seal (3) is constituted of a hard embedded annular member (35) embedded in the other end (12), and a lip (36) swollen and formed on the inner peripheral surface of the other end (12) (refer to paragraph [0055] and FIG. 5 in Patent Document 1).

### Prior Art Document

### Patent Document

Patent Document 1: Japanese Unexamined Patent Application Publication No. 2019-007568

### Summary

### Problem to be Solved

Japanese Unexamined Patent Application Publication No. 2019-007568 (Patent Document 1) does not mention how the cylindrical member (1) is connected to the two pipe flow paths (4) and (5). From the viewpoint of the structures of the one end-side seal (2) provided at one end (11) and the other end-side seal (3) provided at the other end (12), the invention described in Patent Document 1 does not allow for mechanical connection using, for example, a jig or the like, and is thought to mainly require manual connection. Therefore, a large coupling force to the two pipe flow paths (4) and (5) cannot be expected, and it is inferred that high sealability cannot be obtained. Its improvement is desired.

An object of the present disclosure is to obtain high sealability for two connected pipes.

### Means for Solving the Problem

A pipe connector of the present disclosure is interposed between two pipes arranged in series facing each other in an axial direction and connects the two pipes. The pipe connector includes a rubber elastic body, a first reinforcing ring having a first cylinder and a first flange higher in rigidity than the elastic body, and a second reinforcing ring having a second cylinder and an outward second flange higher in rigidity than the elastic body. The elastic body has at both ends, connection portions respectively fitted to one of the pipes and the other pipe and has a cylindrical shape in which a flexible diaphragm is integrally provided between the two connection portions. A seal which seals the pipe is integrally provided at the connection portion in the elastic body. The first reinforcing ring is embedded in one of the connection portions fitted to the one pipe, and the second reinforcing ring is embedded in the other connection portion fitted to the other pipe. The first flange receives a force of a jig in a direction from the other connection portion toward the one connection portion, and the second flange receives at an outer periphery of the elastic body, a force of a jig in a direction from the one connection portion toward the other connection portion.

As one aspect of the pipe connector, the first flange is an inward flange which receives an axial force of a jig inserted into the elastic body from the other connection portion.

As another aspect of the pipe connector, the first flange is an outward flange which receives an axial force of a jig inserted into the diaphragm from a direction orthogonal to the axial direction.

One aspect of a pipe connection method using a pipe connector includes preparing the pipe connector of the above one aspect and inserting a first jig having a diameter axially overlapping with the first flange into the elastic body from the other connection portion, pushing the first pipe in to pressurize the first flange in a state in which the one pipe and the one connection portion are aligned so as to be fitted to each other, and connecting the one pipe and the one connection portion, removing the first jig, inserting a second jig having a circular arc shape from a direction orthogonal to an axial direction with respect to the diaphragm of the elastic body, pressurizing the second flange with the second jig in a state in which the other pipe and the other connection portion are aligned so as to be fitted to each other, and connecting the other pipe and the other connection portion, and removing the second jig.

Another aspect of a pipe connection method using a pipe connector includes preparing the pipe connector of another aspect described above, and inserting the jig having the circular arc shape from a direction orthogonal to the axial direction with respect to the diaphragm, pressurizing the first flange with the jig in a state in which the one pipe and the one connection portion are aligned so as to be fitted to each other, and connecting the one pipe and the one connection portion, pressurizing the second flange with the jig in a state in which the other pipe and the other connection portion are aligned so as to be fitted to each other, and connecting the other pipe and the other connection portion, and removing the jig.

### Effect

High sealability can be obtained for two connected pipes.

### Brief Description of Drawings

FIG. 1 is a longitudinal front view illustrating a pipe connector according to a first embodiment;
FIG. 2 is a longitudinal front view of the pipe connector indicating the dimensions of each part;
FIGS. 3A to 3E are schematic views illustrating each step of a pipe connection method in order in a state in which the pipe connector is drawn in a longitudinal cross-sectional view, and FIG. 3F is a schematic view of the pipe connector as viewed from the front;
FIGS. 4A to 4F are schematic views illustrating each step of the pipe connection method in order in a state in which the pipe connector is viewed obliquely downward;
FIG. 5 is a longitudinal front view illustrating a modification of the pipe connector according to the first embodiment;
FIG. 6 is a schematic view illustrating a pipe connector according to a second embodiment together with a connecting step to a pipe in a cross-sectional shape in which the pipe connector is halved in a portion of a shaft;
FIG. 7 is a schematic view illustrating a modification of the pipe connector according to the second embodiment;
FIG. 8 is a schematic view illustrating a pipe connector according to a third embodiment together with a connecting step to a pipe in a cross-sectional shape in which the pipe connector is halved in a portion of a shaft;
FIG. 9 is a schematic view illustrating a modification of the pipe connector according to the third embodiment;
FIG. 10 is a schematic view illustrating a pipe connector according to a fourth embodiment together with a reinforcing member embedded in a diaphragm in a cross-sectional shape in which the pipe connector is halved in a portion of a shaft;
FIG. 11(A) is a schematic view illustrating a first example of an embedding position of the reinforcing member, and FIG. 11(B) is a schematic view illustrating a second example thereof;
FIG. 12(A) is a schematic view illustrating a third example of the embedding position of the reinforcing member, and FIG. 12(B) is a schematic view illustrating a fourth example of the embedding position thereof;
FIG. 13(A) is a schematic view illustrating a fifth example of the embedding position of the reinforcing member, and FIG. 13(B) is a schematic view illustrating a sixth example of the embedding position thereof; and
FIG. 14 is a schematic view illustrating a shape of a diaphragm included in a pipe connector according to a fifth embodiment, in which FIG. 14(A) illustrates a first form, FIG. 14(B) illustrates a second form, and FIG. 14(C) illustrates a third form, respectively.

### Description of Embodiments

Embodiments will be described with reference to the drawings. Description items are as follows.

### [First embodiment]

1. Configuration of pipe connector
   (1) Summary
   (2) Elastic body
   (3) Seal
   (4) Reinforcing ring
   (5) Fitting of pipe and pipe connector
2. Pipe connection method using pipe connector
   (1) Inserting step of first jig
   (2) Connecting step between one pipe and one connection portion
   (3) Removing step of first jig
   (4) Inserting step of second jig
   (5) Connecting step between the other pipe and the other connection portion
   (6) Removing step of second jig
3. Action and effect
   (1) Improvement of sealability
   (2) Flexibility of connection
   (3) Connection of pipes having the same diameter
4. Modification

### [Second embodiment]

1. Configuration of pipe connector
2. Pipe connection method using pipe connector
   (1) Inserting step of first jig
   (2) Connecting step between one pipe and one connection portion
   (3) Removing step of first jig
   (4) Inserting step of second jig
   (5) Connecting step between the other pipe and the other connection portion
   (6) Removing step of second jig
3. Action and effect
4. Modification

### [Third embodiment]

1. Configuration of pipe connector
2. Pipe connection method using pipe connector
   (1) Inserting step of jig
   (2) Connecting step between one pipe and one connection portion
   (3) Connecting step between the other pipe and the other connection portion
   (4) Removing step of jig
3. Action and effect
4. Modification

### [Fourth embodiment]

1. Configuration of pipe connector
2. Pipe connection method using pipe connector
3. Action and effect
   (1) Improvement of durability
   (2) Buckling suppression
   (3) Improvement of tensile strength
   (4) Weight reduction
   (5) Adjustment of eccentricity followability

### [Fifth embodiment]

1. Configuration of pipe connector
2. Pipe connection method using pipe connector
3. Action and effect

### [Modifications]

### [First embodiment]

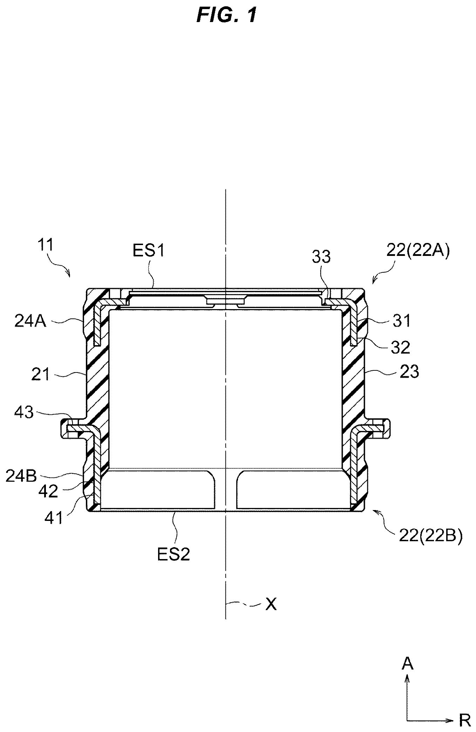

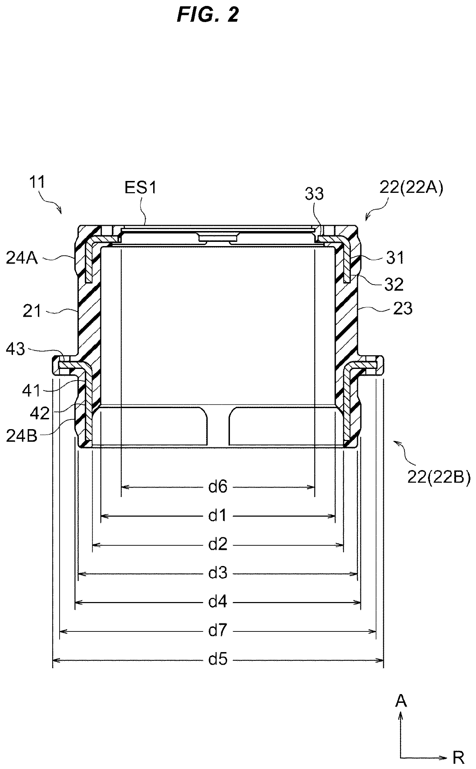

A first embodiment will be described based on FIGS. 1 to 5.

### 1. Configuration of pipe connector

### (1) Summary

As illustrated in FIGS. 1 to 4, a pipe connector 11 according to the present embodiment is interposed between two pipes 101 arranged in opposite to each other in series in an axial direction and connects the two pipes 101.

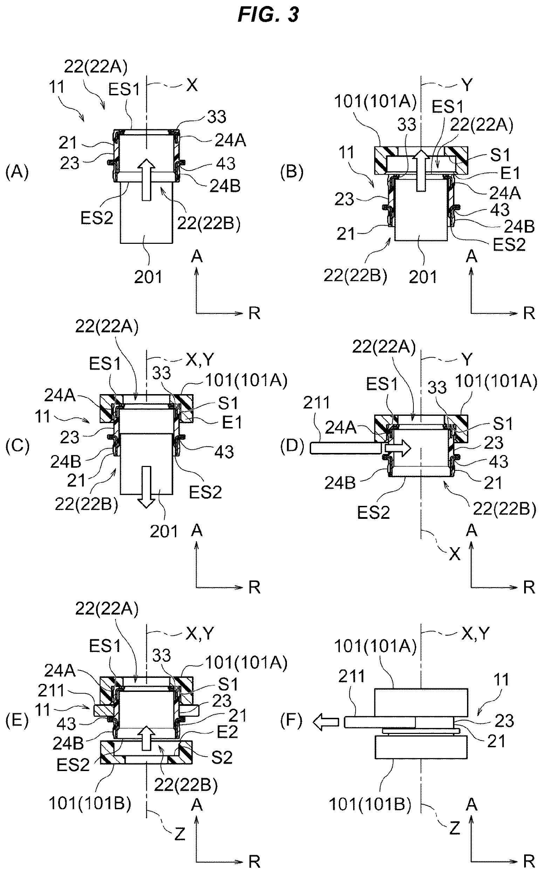

For convenience of description, one of the two pipes 101 is referred to as a pipe 101A, and the other pipe 101 is referred to as a pipe 101B. In FIG. 1, an axis passing through the center of the pipe connector 11 is indicated by a code X. In FIG. 3, an axis passing through the center of the pipe 101A is indicated by a code Y, and an axis passing through the center of the pipe 101B is indicated by a code Z, respectively.

In the drawings, a code A indicates an axial direction, and a code R indicates a radial direction perpendicular to the axial direction A, respectively. When the two pipes (101A, 101B) and the pipe connector 11 are arranged at normal positions, the axes X, Y, and Z are located on the same axis and become parallel to the axial direction A. However, in reality, the two pipes (101A, 101B) are axially displaced in the axial direction A, in the radial direction R, or by changing the angle so that the two axes Y and Z intersect with each other.

As another aspect, the axis Y of the pipe 101A and the axis Z of the pipe 101B may not necessarily coincide on the same axis. The axis Y and the axis Z may be displaced so as to cross each other even if they are deviated in parallel. Such a state where the axis Y and the axis Z are misaligned can also be set to the normal positions of the two pipes 101 (101A, 101B).

The present embodiment discloses the pipe connector 11 which connects the two pipes 101 (101A, 101B) while absorbing unintentionally generated or originally scheduled axis displacement.

The pipe connector 11 is mainly comprised of a rubber elastic body 21. The elastic body 21 includes, at both ends, connection portions 22 which fit into an end E1of the pipe 101A and an end E2 of the pipe 101B, respectively. A diaphragm 23 having flexibility is integrally provided between the two connection portions 22. For convenience of description, one connection portion 22 connected to the pipe 101A is referred to as a connection portion 22A, and the other connection portion 22 connected to the pipe 101B is referred to as a connection portion 22B.

A first reinforcing ring 31 made of a material higher in rigidity than the elastic body 21 is embedded in the connection portion 22A. The first reinforcing ring 31 includes a first cylinder 32 and a first flange 33. The first flange 33 is bent perpendicularly inward in the radial direction R from an end of the first cylinder 32 which is on the axial direction A and on the head side in a fitting direction to the pipe 101A.

The elastic body 21 is connected to the pipe 101A by fitting the connection portion 22A to an inner peripheral surface of the pipe 101A. A seal 24A is integrally provided on an outer peripheral surface of the connection portion 22A.

A second reinforcing ring 41 made of a material higher in rigidity than the elastic body 21 is embedded in the connection portion 22B. The second reinforcing ring 41 includes a second cylinder 42 and a second flange 43. The second flange 43 is bent at a right angle toward the outside in the radial direction R from an end of the second cylinder 42 which is on the rear side in the fitting direction to the pipe 101B on the axial direction A.

The elastic body 21 is connected to the pipe 101B by fitting the connection portion 22B to an inner peripheral surface of the pipe 101B. A seal 24B is integrally provided on an outer peripheral surface of the connection portion 22B.

### (2) Elastic body

The elastic body 21 is formed of rubber as a material. For example, chloroprene rubber (CR), ethylene propylene rubber (EPDM), acrylic rubber (ACM), and the like can be used as a material of the elastic body 21.

As shown in FIG. 1, the shape of the elastic body 21 is basically cylindrical in shape, but the shape of the elastic body 21 is not a complete cylindrical shape.

The end of the connection portion 22A extends inward in the radial direction R. The first flange 33 is embedded in this portion.

A part of an outer peripheral surface of the elastic body 21 close to the connection portion 22B protrudes outward in the radial direction R. The second flange 43 is embedded in this portion.

Therefore, the first flange 33 and the second flange 43 are in a state of being covered with the rubber which constitutes the elastic body 21.

An inner peripheral surface of the elastic body 21 maintains a uniform inner diameter d1 over the entire region. However, on the side of the connection portion 22B, only the region near the frontage has an inner diameter d2 slightly larger than the inner diameter d1. The region of the inner diameter d2 is approximately 1/3 of the length of the second cylinder 42 in the axial direction A.

The outer diameter of the outer peripheral surface of the elastic body 21 is set to an outer diameter d3. The two seals 24A and 24B having the same diameter with each other have an outer diameter d4 slightly larger than the outer diameter d3. A portion of the outer peripheral surface of the elastic body 21 in which the second flange 43 is embedded forms an outer diameter d5 which is the maximum diameter.

The elastic body 21 has a region in which the first reinforcing ring 31 is embedded, as the connection portion 22A, a region in which the second reinforcing ring 41 is embedded, as the connection portion 22B, and a region between the connection portion 22A and the connection portion 22B as the diaphragm 23. The diaphragm 23 is a flexible region made of only rubber, and absorbs axial displacement generated between the connection portion 22A and the connection portion 22B.

### (3) Seal

As described above, the elastic body 21 is integrally provided with the seal 24A on the outer peripheral surface of the connection portion 22A, and is integrally provided with the seal 24B on the outer peripheral surface of the connection portion 22B.

As illustrated in FIG. 1, the seal 24A protrudes annularly from the outer peripheral surface of the connection portion 22A at a position corresponding to the first cylinder 32. The amount of protrusion is (d4-d3)/2. The seal 24A and the first reinforcing ring 31 cooperate to seal a coupling portion between the pipe 101A and the connection portion 22A. That is, the seal 24A increases the contact pressure with the inner peripheral surface of the pipe 101A to strengthen seal action, and the first cylinder 32 receives a force to escape inward in the radial direction R acting on the seal 24A.

The seal 24B protrudes annularly from the outer peripheral surface of the connection portion 22B at a position corresponding to the second cylinder 42. The amount of protrusion is (d4-d3)/2. The seal 24B and the second reinforcing ring 41 cooperate to seal a coupling portion between the pipe 101B and the connection portion 22B. That is, the seal 24B increases the contact pressure with the inner peripheral surface of the pipe 101B to strengthen seal action, and the second cylinder 42 receives a force to escape inward in the radial direction R acting on the seal 24B.

### (4) Reinforcing ring

The first reinforcing ring 31 and the second reinforcing ring 41 are annular members manufactured by pressing a metal, for example. In addition to the metal, any material which is higher in rigidity than the elastic body 21 and can increase the bonding strength between the pipes 101 (101A, 101B) and the connection portions 22 (22A, 22B), such as a synthetic resin can be used.

As illustrated in FIG. 1, the first cylinder 32 of the first reinforcing ring 31 and the second cylinder 42 of the second reinforcing ring 41 both have a cylindrical shape having a diameter slightly larger than the inner diameter d2, which is the large diameter of the elastic body 21. The first cylinder 32 and the second cylinder 42 have the same diameter.

The first flange 33 included in the first reinforcing ring 31 is an inward flange and has a shape with an opening at its center. The diameter of the opening, that is, the inner diameter d6 of the first flange 33 is smaller than the inner diameter d1 which is the small diameter of the elastic body 21. Therefore, when the connection portion 22A is viewed from the connection portion 22B, the first flange 33 extends inward of an inner wall of the elastic body 21 in the radial direction R.

The second flange 43 included in the second reinforcing ring 41 is an outward flange. An outer diameter d7 of the second flange 43 is larger than the outer diameter d4 of the two seals 24A and 24B. Therefore, when the connection portion 22A is viewed from the connection portion 22B, the second flange 43 extends outward in the radial direction R from the two seals 24A and 24B.

### (5) Fitting of pipe and pipe connector

The two connection portions 22 (22A, 22B) of the elastic body 21 fit to the inner peripheral sides of the two pipes 101 (101A, 101B), respectively.

The two pipes 101 (101A, 101B) have an inner diameter of the same dimension. Therefore, the diameter of the fitting portion of the connection portion 22A with respect to the pipe 101A coincides with the diameter of the fitting portion of the connection portion 22B with respect to the pipe 101B.

The inner diameter of the pipe 101A is equal to or slightly smaller than the outer diameter d3 of the elastic body 21. The inner diameter of the pipe 101B is also the same as or slightly smaller than the outer diameter d3 of the elastic body 21. Therefore, when the two connection portions 22 (22A, 22B) are fitted to the two pipes 101 (101A, 101B) respectively, the seals 24A and 24B are crushed.

A step S1 is provided inside the end E1 of the pipe 101A. An end surface ES1 of the connection portion 22A fitted to the pipe 101A abuts against the step S1.

A step S2 is provided inside the end E2 of the pipe 101B. An end surface ES2 of the connection portion 22B fitted to the pipe 101B abuts against the step S2.

### 2. Pipe connection method using pipe connector

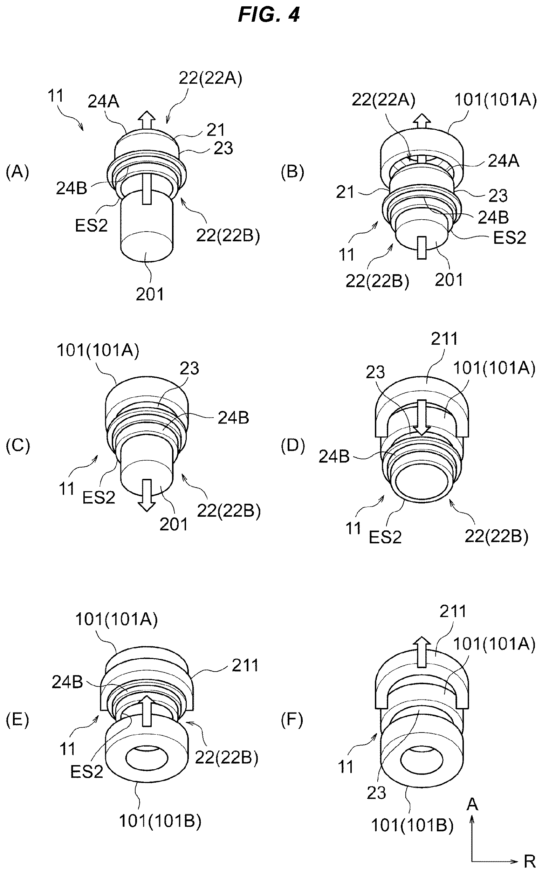

A method of connecting the two pipes 101 (101A, 101B) by the pipe connector 11 will be mainly described with reference to FIGS. 3 and 4.

### (1) Inserting step of first jig

As illustrated in FIGS. 3(A) and 4(A), the pipe connector 11 is prepared, and a first jig 201 is inserted into the elastic body 21.

The first jig 201 is a columnar member having an outer diameter slightly smaller than the inner diameter d1 of the elastic body 21 and having a larger diameter than the inner diameter d6 of the first flange 33. That is, the first jig 201 has a diameter which overlaps with the first flange 33 in the axial direction A.

In the present step, the first jig 201 is inserted into the elastic body 21 from the connection portion 22B. The first jig 201 abuts against the rubber which covers the first flange 33. The first flange 33 receives the force of the first jig 201 in a direction from the connection portion 22B toward the connection portion 22A.

### (2) Connecting step between one pipe and one connection portion

As illustrated in FIGS. 3(B) and 4(B), the pipe 101A and the connection portion 22A of the elastic body 21 are aligned so as to fit each other. When the first jig 201 is pushed in in this state and the first flange 33 is pressurized, the first flange 33 receives the force of the first jig 201 in the direction from the connection portion 22B toward the connection portion 22A, and pushes the connection portion 22A into the pipe 101A. When the end surface ES1 of the connection portion 22A abuts against the step S1 of the pipe 101A, the pipe 101A and the connection portion 22A are brought into a connected state.

As another method, the pipe 101A may be pressed to the first jig 201 inserted into the elastic body 21 while being aligned so as to fit the pipe 101A and the connection portion 22A of the elastic body 21. When the step S1 of the pipe 101A abuts against the end surface ES1 of the connection portion 22A, the pipe 101A and the connection portion 22A are brought into a connected state.

Even if any method is adopted, the seal 24A is crushed, and the pipe 101A and the connection portion 22A are sealed.

### (3) Removing step of first jig

As illustrated in FIGS. 3(C) and 4(C), when the pipe 101A and the connection portion 22A are connected, the first jig 201 is pulled out and removed from the elastic body 21.

### (4) Inserting step of second jig

As illustrated in FIGS. 3(D) and 4(D), the second jig 211 is inserted into the elastic body 21.

The second jig 211 is a member having an arc-like shape as if a cylindrical member has been cut in the axial direction. The thickness of the second jig 211 in the axial direction is set narrower than the interval between the end E1 of the pipe 101A connected to the connection portion 22A and the rubber of the elastic body 21 covering the second flange 43.

In the present step, the second jig 211 is inserted into the diaphragm 23 of the elastic body 21 from the direction (radial direction R) orthogonal to the axial direction A. The object to be inserted into the diaphragm 23 is an arc-shaped inner wall of the second jig 211.

### (5) Connecting step between the other pipe and the other connection portion

As illustrated in FIGS. 3(E) and 4(E), the pipe 101B and the connection portion 22B are aligned so as to fit each other. Thus, the second jig 211 is disposed at a position overlapping with the second flange 43 in the axial direction A. When the second flange 43 is pressurized by the second jig 211 in this state, the second flange 43 receives the force of the second jig 211 in the direction from the connection portion 22A toward the connection portion 22B, and pushes the connection portion 22B into the pipe 101B. When the end surface ES2 of the connection portion 22B abuts against the step S2 of the pipe 101B, the pipe 101B and the connection portion 22B are brought into a connected state.

As another method, the pipe 101B may be pressed to the second jig 211 attached to the diaphragm 23 while being aligned so as to fit the pipe 101B and the connection portion 22B. When the step S2 of the pipe 101B abuts against the end surface ES2 of the connection portion 22B, the pipe 101B and the connection portion 22B are brought into a connected state.

Even if any method is adopted, the seal 24B is crushed, and the pipe 101B and the connection portion 22B are sealed.

### (6) Removing step of second jig

As illustrated in FIGS. 3(F) and 4(F), when the pipe 101B and the connection portion 22B are connected, the second jig 211 is pulled out and removed from the elastic body 21.

Thus, the pipe 101A and the connection portion 22A are connected, the pipe 101B and the connection portion 22B are connected, and the two pipes 101 (101A, 101B) are connected by the pipe connector 11.

### 3. Action and effect

Since the pipe connector 11 according to the present embodiment and the pipe connection method using the same are configured as described above, they have various action and effects such as shown next.

### (1) Improvement of sealability

According to the present embodiment, the first jig 201 is used for the connection between the pipe 101Aand the connection portion 22A, and the second jig 211 is used for the connection between the pipe 101B and the connection portion 22B. Therefore, the two pipes 101 (101A, 101B) and the two connection portions 22 (22A, 22B) can be connected by press-fitting using a machine. Thus, the interference between the two pipes 101 (101A, 101B) and the two connection portions 22 (22A, 22B) can be increased, and both of them can be connected with a large bonding force. As a result, high sealability can be obtained for the two pipes 101 (101A, 101B).

### (2) Flexibility of connection

Since the diaphragm 23 provided in the elastic body 21 has flexibility, it absorbs axial displacement generated between the two pipes 101 (101A, 101B). Therefore, according to the pipe connector 11 of the present embodiment, it is possible to follow static or dynamic eccentricity between the two pipes 101 (101A, 101B).

### (3) Connection of pipes having the same diameter

Since the first flange 33 receives the force of the first jig 201 from the inner periphery of the elastic body 21, and the second flange 43 receives the force of the second jig 211 from the outer periphery of the elastic body 21, the two pipes 101 (101A, 101B) having the same diameter can be connected.

### 4. Modification

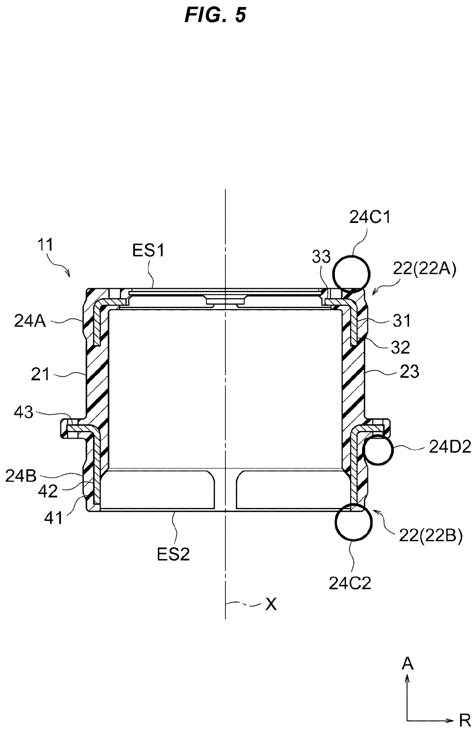

FIG. 5 is a longitudinal front view illustrating a modification of the pipe connector 11 according to the first embodiment.

The present modification is a variation of the seal. The elastic body 21 according to the present modification includes three types of seals 24C1, 24C2, and 24D2 separately from the seals 24A and 24B. In FIG. 5, the seal 24C1, the seal 24C2, and the seal 24D2 are schematically indicated by circle symbols indicating their arrangement positions.

In the end surface ES1 of the connection portion 22A, the seal 24C1 is annularly provided at a position axially aligned with the first cylinder 32 of the first reinforcing ring 31. When the connection portion 22A is fitted to the pipe 101A, the seal 24C1 abuts against the step S1 provided in the end E1 of the pipe 101A, and seals the pipe 101A and the connection portion 22A.

In the end surface ES2 of the connection portion 22B, the seal 24C2 is annularly provided at a position axially aligned with the second cylinder 42 of the second reinforcing ring 41. When the connection portion 22B is fitted to the pipe 101B, the seal 24C2 abuts against the step S2 provided in the end E2 of the pipe 101B, and seals the pipe 101B and the connection portion 22B.

The seal 24D2 is annularly provided at the portion of the rubber of the elastic body 21 covering the second flange 43, which faces the pipe 101B. When the connection portion 22B is fitted to the pipe 101B, the seal 24D2 abuts against the end E2 of the pipe 101B, and seals the pipe 101B and the connection portion 22B.

### [Second embodiment]

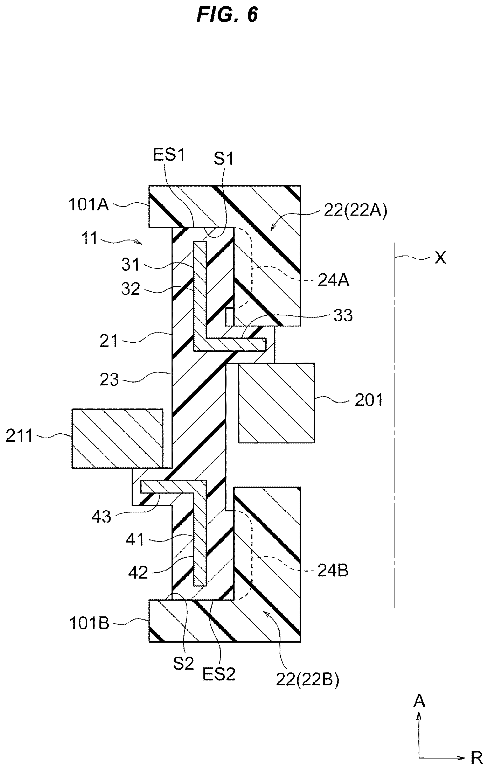

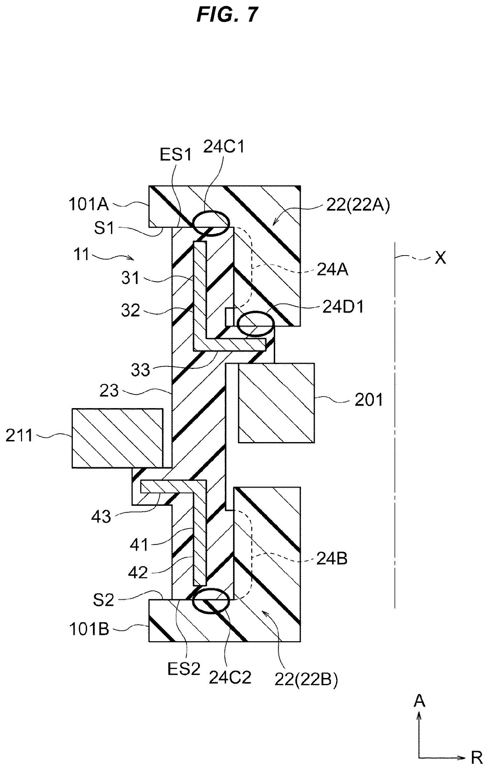

A second embodiment will be described with reference to FIGS. 6 and 7. The same parts as in the first embodiment are denoted by the same reference numerals, and the description thereof will also be omitted.

### 1. Configuration of pipe connector

The present embodiment is different from the first embodiment in that two connection portions 22 (22A, 22B) of an elastic body 21 are fitted to outer peripheries of two pipes 101 (101A, 101B), respectively. In such a structure, both seals 24A and 24B are provided on an inner peripheral surface of the elastic body 21.

A first reinforcing ring 31 is provided with a first flange 33 at an end of a first cylinder 32 which is on the rear side in the fitting direction to the pipe 101A.

### 2. Pipe connection method using pipe connector

A method of connecting the two pipes 101 (101A, 101B) by a pipe connector 11 will be described with reference to FIG. 6.

### (1) Inserting step of first jig

The pipe connector 11 is prepared, and a first jig 201 is inserted into the elastic body 21.

The first jig 201 has a diameter which overlaps with the first flange 33 in an axial direction A. Therefore, the first jig 201 inserted into the elastic body 21 abuts against rubber covering the first flange 33. The first flange 33 receives the force of the first jig 201 in a direction from the connection portion 22B toward the connection portion 22A.

### (2) Connecting step between one pipe and one connection portion

The pipe 101A and the connection portion 22A of the elastic body 21 are aligned so as to fit each other. When the first jig 201 is pushed in this state and the first flange 33 is pressurized, the first flange 33 receives the force of the first jig 201 in the direction from the connection portion 22B toward the connection portion 22A, and pushes the connection portion 22A into the pipe 101A. When an end surface ES1 of the connection portion 22A abuts against a step S1 of the pipe 101A, the pipe 101A and the connection portion 22A are brought into a connected state.

As another method, the pipe 101A may be pressed to the first jig 201 inserted into the elastic body 21 while being aligned so as to fit the pipe 101A and the connection portion 22A of the elastic body 21. When the step S1 of the pipe 101A abuts against the end surface ES1 of the connection portion 22A, the pipe 101A and the connection portion 22A are brought into a connected state.

Even if any method is adopted, the seal 24A is crushed, and the pipe 101A and the connection portion 22A are sealed.

### (3) Removing step of first jig

When the pipe 101A and the connection portion 22A are connected, the first jig 201 is pulled out and removed from the elastic body 21.

### (4) Inserting step of second jig

A second jig 211 is inserted into the elastic body 21.

The second jig 211 is a member having an arc-like shape as if a cylindrical member has been cut in the axial direction (refer to FIGS. 4(D) to 4(F) illustrating the first embodiment).

In the present step, the second jig 211 is inserted into a diaphragm 23 of the elastic body 21 from a direction (radial direction R) orthogonal to the axial direction A. The object to be inserted into the diaphragm 23 is an arc-shaped inner wall of the second jig 211.

### (5) Connecting step between the other pipe and the other connection portion

The pipe 101B and the connection portion 22B are aligned so as to fit each other. Thus, the second jig 211 is disposed at a position overlapping with a second flange 43 in the axial direction A. When the second flange 43 is pressurized by the second jig 211 in this state, the second flange 43 receives the force of the second jig 211 in a direction from the connection portion 22A toward the connection portion 22B, and pushes the connection portion 22B into the pipe 101B. When an end surface ES2 of the connection portion 22B abuts against a step S2 of the pipe 101B, the pipe 101B and the connection portion 22B are brought into a connected state.

As another method, the pipe 101B may be pressed to the second jig 211 attached to the diaphragm 23 while being aligned so as to fit the pipe 101B and the connection portion 22B. When the step S2 of the pipe 101B abuts against the end surface ES2 of the connection portion 22B, the pipe 101B and the connection portion 22B are brought into a connected state.

Even if any method is adopted, the seal 24B is crushed, and the pipe 101B and the connection portion 22B are sealed.

### (6) Removing step of second jig

When the pipe 101B and the connection portion 22B are connected, the second jig 211 is pulled out and removed from the elastic body 21.

Thus, the pipe 101A and the connection portion 22A are connected, the pipe 101B and the connection portion 22B are connected, and the two pipes 101 (101A, 101B) are connected by the pipe connector 11.

### 3. Action and effect

The present embodiment also has the same action and effects as in the first embodiment.

### 4. Modification

FIG. 7 is a longitudinal front view illustrating a modification of the pipe connector 11 according to the second embodiment.

The present modification is a variation of a seal. An elastic body 21 according to the present modification includes three types of seals 24C1, 24C2, and 24D1 separately from seals 24A and 24B. In FIG. 7, the seal 24C1, the seal 24C2, and the seal 24D1 are schematically indicated by circle symbols indicating their arrangement positions.

In an end surface ES1 of a connection portion 22A, the seal 24C1 is annularly provided at a position axially aligned with a first cylinder 32 of a first reinforcing ring 31. When the connection portion 22A is fitted to a pipe 101A, the seal 24C1 abuts against a step S1 provided in an end E1 of the pipe 101A, and seals the pipe 101A and the connection portion 22A.

In an end surface ES2 of the connection portion 22B, the seal 24C2 is annularly provided at a position axially aligned with a second cylinder 42 of a second reinforcing ring 41. When the connection portion 22B is fitted to the pipe 101B, the seal 24C2 abuts against a step S2 provided in an end E2 of the pipe 101B, and seals the pipe 101B and the connection portion 22B.

The seal 24D1 is annularly provided at the portion of the rubber of the elastic body 21 covering a first flange 33, which faces the pipe 101A. When the connection portion 22A is fitted to the pipe 101A, the seal 24D1 abuts against the end E1 of the pipe 101A, and seals the pipe 101A and the connection portion 22A.

### [Third embodiment]

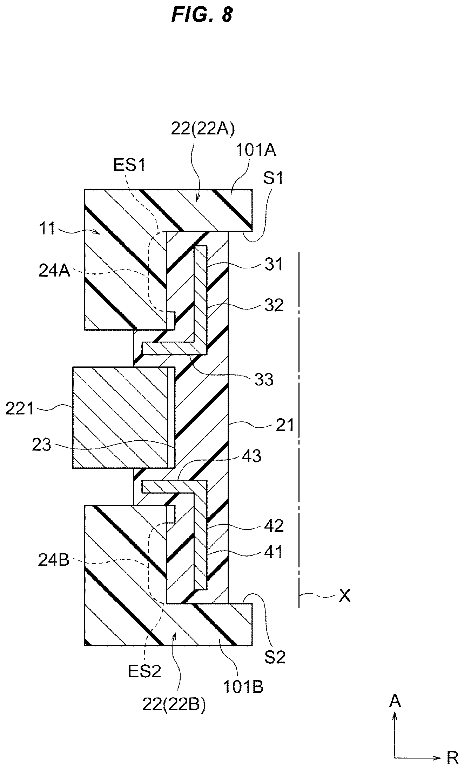

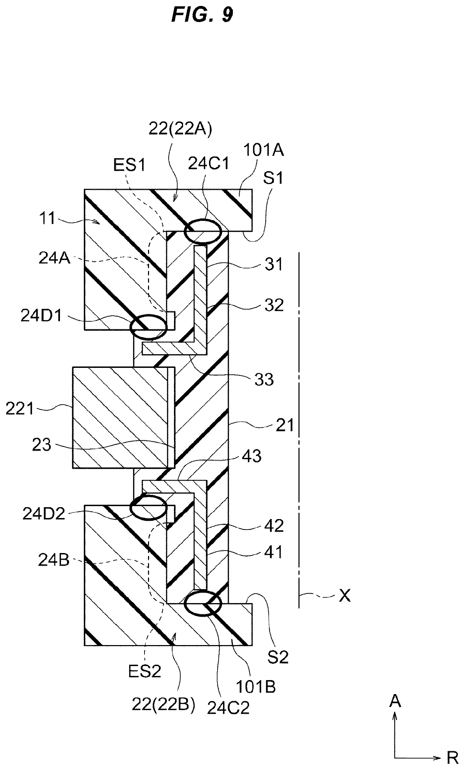

A third embodiment will be described with reference to FIGS. 8 and 9. The same parts as in the first and second embodiments are denoted by the same reference numerals, and the description thereof will also be omitted.

### 1. Configuration of pipe connector

The present embodiment is common to the first embodiment in that two connection portions 22 (22A, 22B) of an elastic body 21 are fitted to inner peripheries of two pipes 101 (101A, 101B), respectively, but different from the second embodiment. In such a structure, both seals 24A and 24B are provided on an outer peripheral surface of the elastic body 21.

A first reinforcing ring 31 is provided with a first flange 33 at an end of a first cylinder 32 which is on the rear side in the fitting direction to the pipe 101A. In this respect, the present embodiment is different from the first embodiment and is in common with the second embodiment. However, unlike the second embodiment, the first flange 33 is an outward flange. Since the first flange 33 is set to the outward flange, the first flange 33 and a second flange 43 face each other with a diaphragm 23 sandwiched therebetween.

Other points are common to the first and second embodiments.

### 2. Pipe connection method using pipe connector

A method of connecting the two pipes 101 (101A, 101B) by a pipe connector 11 will be described with reference to FIG. 8.

### (1) Inserting step of jig

The pipe connector 11 is prepared, and a jig 221 is inserted into the elastic body 21.

The jig 221 is a member having an arc-like shape as if a cylindrical member has been cut in an axial direction. The thickness of the jig 221 in the axial direction is set narrower than the interval between the first flange 33 and the second flange 43 facing each other via the diaphragm 23. The jig 221 has a diameter which overlaps with the first flange 33 and the second flange 43 in the axial direction A.

In the present step, the jig 221 is inserted into the diaphragm 23 of the elastic body 21 from a direction (radial direction R) orthogonal to the axial direction A. The object to be inserted into the diaphragm 23 is an arc-shaped inner wall of the jig 221.

### (2) Connecting step between one pipe and one connection portion

The pipe 101A and the connection portion 22A of the elastic body 21 are aligned so as to fit each other. When the jig 221 is pushed toward the pipe 101A in this state and the first flange 33 is pressurized, the first flange 33 receives the force of the jig 221 in the direction from the connection portion 22B toward the connection portion 22A, and pushes the connection portion 22A into the pipe 101A. When an end surface ES1 of the connection portion 22A abuts against a step S1 of the pipe 101A, the pipe 101A and the connection portion 22A are brought into a connected state.

As another method, the pipe 101A may be pressed to the jig 221 attached to the diaphragm 23 while being aligned so as to fit the pipe 101A and the connection portion 22A of the elastic body 21. When the step S1 of the pipe 101A abuts against the end surface ES1 of the connection portion 22A, the pipe 101A and the connection portion 22A are brought into a connected state.

Even if any method is adopted, the seal 24A is crushed, and the pipe 101A and the connection portion 22A are sealed.

### (3) Connecting step between the other pipe and the other connection portion

The pipe 101B and the connection portion 22B are aligned so as to fit each other. When the jig 221 is pushed toward the pipe 101B, and the second flange 43 is pressurized, the second flange 43 receives the force of the jig 221 in a direction from the connection portion 22A toward the connection portion 22B, and pushes the connection portion 22B into the pipe 101B. When an end surface ES2 of the connection portion 22B abuts against a step S2 of the pipe 101B, the pipe 101B and the connection portion 22B are brought into a connected state.

As another method, the pipe 101B may be pressed to the jig 221 attached to the diaphragm 23 in a state in which the pipe 101B and the connection portion 22B are aligned to be fitted. When the step S2 of the pipe 101B abuts against the end surface ES2 of the connection portion 22B, the pipe 101B and the connection portion 22B are brought into a connected state.

Even if any method is adopted, the seal 24B is crushed, and the pipe 101B and the connection portion 22B are sealed.

### (4) Removing step of jig

When the pipe 101B and the connection portion 22B are connected, the jig 221 is pulled out and removed from the elastic body 21.

Thus, the pipe 101A and the connection portion 22A are connected, the pipe 101B and the connection portion 22B are connected, and the two pipes 101 (101A, 101B) are connected by the pipe connector 11.

### 3. Action and effect

According to the present embodiment, the jig 221 is attached to the diaphragm 23 of the elastic body 21, and both the work of connecting the pipe 101A and the connection portion 22A and the work of connecting the pipe 101B and the connection portion 22B can be supported by the single jig 221. Therefore, the single jig 221 can be used for both purposes, so that the pipe connection method can be executed with a small number of steps, and work efficiency can be improved.

For other points, the present embodiment also has the same action and effects as those of the first and second embodiments.

### 4. Modification

FIG. 9 is a longitudinal front view illustrating a modification of the pipe connector 11 according to the third embodiment.

The present modification is a variation of a seal. An elastic body 21 according to the present modification includes four types of seals 24C1, 24C2, 24D1, and 24D2 separately from seals 24A and 24B. In FIG. 9, the seal 24C1, the seal 24C2, the seal 24D1, and the seal 24D2 are schematically indicated by circle symbols indicating their arrangement positions.

In an end surface ES1 of a connection portion 22A, the seal 24C1 is annularly provided at a position axially aligned with a first cylinder 32 of a first reinforcing ring 31. When the connection portion 22A is fitted to a pipe 101A, the seal 24C1 abuts against a step S1 provided in an end E1 of the pipe 101A, and seals the pipe 101A and the connection portion 22A.

In an end surface ES2 of a connection portion 22B, the seal 24C2 is annularly provided at a position axially aligned with a second cylinder 42 of a second reinforcing ring 41. When the connection portion 22B is fitted to a pipe 101B, the seal 24C2 abuts against a step S2 provided in an end E2 of the pipe 101B, and seals the pipe 101B and the connection portion 22B.

The seal 24D1 is annularly provided at the portion of the rubber of the elastic body 21 covering a first flange 33, which faces the pipe 101A. When the connection portion 22A is fitted to the pipe 101A, the seal 24D1 abuts against the end E1 of the pipe 101A, and seals the pipe 101A and the connection portion 22A.

The seal 24D2 is annularly provided at the portion of the rubber of the elastic body 21 covering a second flange 43, which faces the pipe 101B. When the connection portion 22B is fitted to the pipe 101B, the seal 24D2 abuts against the end E2 of the pipe 101B, and seals the pipe 101B and the connection portion 22B.

### [Fourth embodiment]

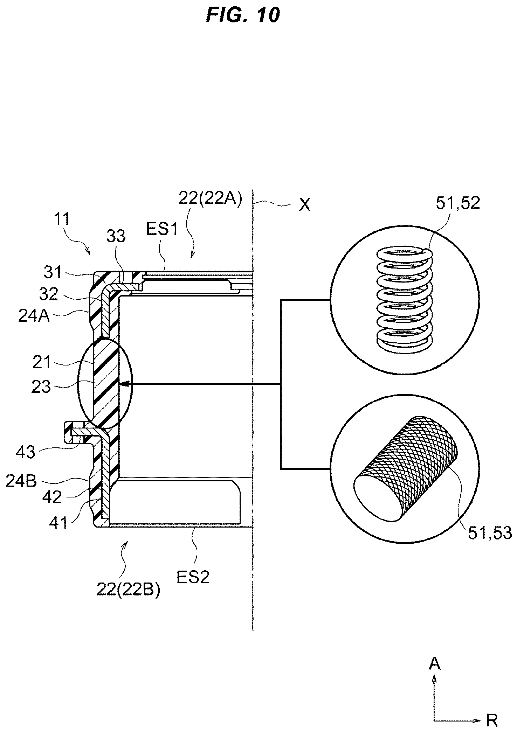

A fourth embodiment will be described with reference to FIGS. 10 to 13. The same parts as those of the first to third embodiments are denoted by the same reference numerals, and the description thereof will also be omitted.

### 1. Configuration of pipe connector

A pipe connector 11 according to the present embodiment includes a reinforcing member 51 embedded in a diaphragm 23 of an elastic body 21. The reinforcing member 51 has a structure capable of improving the rigidity of the diaphragm 23, and for example, a coil spring 52, a base fabric 53 and the like can be used as the reinforcing member 51.

The coil spring 52 has a structure in which a linear member having elasticity is spirally wound. The coil spring 52 can conform to the shape of the cylindrical diaphragm 23, and can be easily embedded in the cylindrical shape of the diaphragm 23. Since the coil spring 52 expands and contracts in an axial direction A and also elastically deforms in both the axial direction A and the radial direction R, the rigidity of the diaphragm 23 is increased when the coil spring 52 is embedded in the diaphragm 23.

The base fabric 53 is a cloth product made by entangling warp and weft, and has a structure in which wefts are driven between warps crossing vertically. Since the base fabric 53 has flexibility from its nature, the base fabric 53 can be embedded in the diaphragm 23 in accordance with the cylindrical shape of the diaphragm 23. The embedded base fabric 53 suppresses deformation of the diaphragm 23 and improves its rigidity.

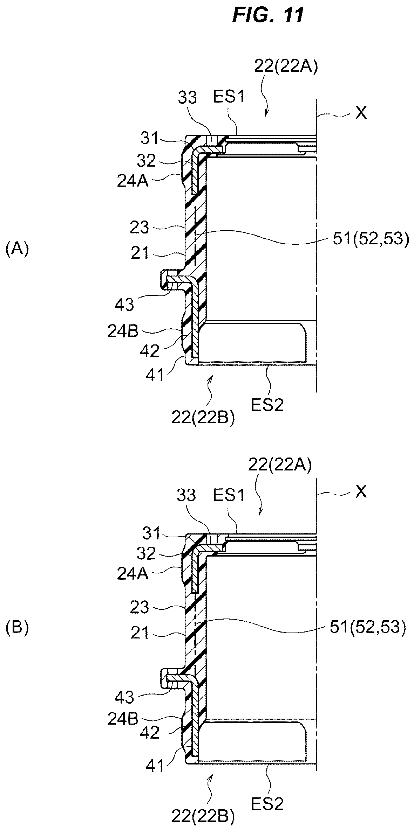

As illustrated in FIGS. 11(A) and 11(B), the reinforcing member 51 such as the coil spring 52, the base fabric 53 or the like can be embedded in a position in the axial direction A passing through a first cylinder 32 and a second cylinder 42 in the diaphragm 23. The reinforcing member 51 may be disposed so as to be in a non-contact state with respect to the first cylinder 32 and the second cylinder 42 (refer to FIG. 11(A)), or may be disposed so as to be in a contact state (refer to FIG. 11(B)).

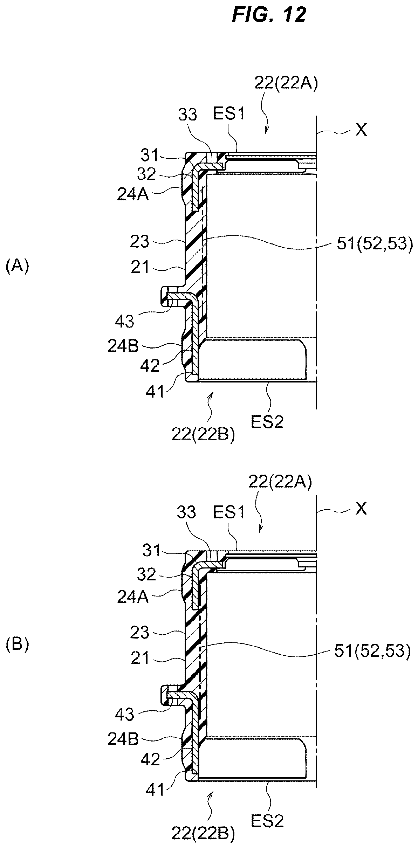

As illustrated in FIGS. 12(A) and 12(B), the reinforcing member 51 such as the coil spring 52, the base fabric 53 or the like can be embedded in the inner peripheries of the first cylinder 32 and the second cylinder 42 along the axial direction A in the diaphragm 23. The reinforcing member 51 may be disposed so as to be in a non-contact state with respect to the first cylinder 32 and the second cylinder 42 (refer to FIG. 12(A)), or may be disposed so as to be in a contact state (refer to FIG. 12(B)).

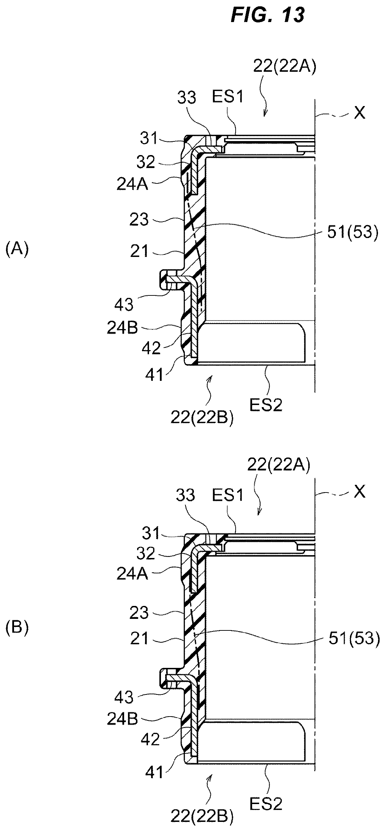

The configuration example illustrated in FIGS. 13(A) and 13(B) is an example in which the base fabric 53 is used as the reinforcing member 51. The base fabric 53 is embedded in the diaphragm 23 so that one end thereof is on the side of the outer periphery of the first cylinder 32 and the other end thereof is on the side of the inner periphery of the second cylinder 42. The base fabric 53 may be disposed so as to be in a non-contact state with respect to the first cylinder 32 and the second cylinder 42 (refer to FIG. 13(A)), or may be disposed so as to be in a contact state (FIG. 13(B)).

Alternately, on the contrary to the states illustrated in FIGS. 13(A) and 13(B), an arrangement example may be used in which one end of the base fabric 53 is on the inner periphery side of the first cylinder 32 and the other end thereof is on the outer periphery side of the second cylinder 42. In this case as well, the base fabric 53 may be arranged so as to be in a non-contact state with respect to the first cylinder 32 and the second cylinder 42, or may be arranged so as to be in a contact state with respect to them.

### 2. Pipe connection method using pipe connector

FIGS. 10 to 13 illustrate a configuration example in which the reinforcing member 51 is embedded in the diaphragm 23 of the pipe connector 11 according to the first embodiment. The object of embedding the reinforcing member 51 in the diaphragm 23 is not limited to the first embodiment, and may be the pipe connector 11 according to the second or third embodiment.

When the reinforcing member 51 is embedded in the diaphragm 23 of the pipe connector 11 according to the first embodiment, the connection direction of the two pipes 101 (101A, 101B) using the reinforcing member 51 follows the pipe connection method according to the first embodiment illustrated in FIGS. 3 and 4.

When the reinforcing member 51 is embedded in the diaphragm 23 of the pipe connector 11 according to the second embodiment, the connection direction of the two pipes 101 (101A, 101B) using the reinforcing member 51 follows the pipe connection method according to the second embodiment illustrated in FIG. 6.

When the reinforcing member 51 is embedded in the diaphragm 23 of the pipe connector 11 according to the third embodiment, the connection direction of the two pipes 101 (101A, 101B) using the reinforcing member 51 follows the pipe connection method according to the third embodiment illustrated in FIG. 8.

### 3. Action and effect

With the reinforcing member 51 embedded therein, the diaphragm 23 increases rigidity without impairing the eccentricity followability following static or dynamic eccentricity between the two pipes 101 (101A, 101B). As a result, the following action and effects are brought about.

### (1) Improvement of durability

When the internal pressure increases upon fluid flowing between the two pipes 101 (101A, 101B) connected via the pipe connector 11, the force to expand the diaphragm 23 is generated. According to the present embodiment, since the expansion of the diaphragm 23 is suppressed by the reinforcing member 51, the durability of the diaphragm 23 can be improved.

### (2) Buckling suppression

The reinforcing member 51 can also generate a restricting force against buckling of the diaphragm 23. Therefore, even if an excessive force that causes buckling is applied to the diaphragm 23 during the work of connecting the connection portions 22 (22A, 22B) of the pipe connector 11 to the pipes 101 (101A, 101B) respectively, the diaphragm 23 can be protected from buckling.

### (3) Improvement of tensile strength

The reinforcing member 51 also increases the tensile strength of the diaphragm 23. For example, in the case where the connection portions 22 (22A, 22B) of the pipe connector 11 are remove from the pipes 101 (101A, 101B) for maintenance or the like, the diaphragm 23 can be protected from damage even when an excessive tensile force that causes damage is applied to the diaphragm 23.

### (4) Weight reduction

As a result of providing the reinforcing member 51, even if the diaphragm 23 is made thin, it is possible to ensure the improvement of durability, the suppression of buckling, and the improvement of tensile strength described above. Therefore, the amount of rubber in the portion of the diaphragm 23 can be reduced, and hence the elastic body 21 can be made light in weight.

### (5) Adjustment of eccentricity followability

When the coil spring 52 is used as the reinforcing member 51, it is possible to adjust the eccentricity followability of the diaphragm 23 by the spring strength thereof.

The base fabric 53 makes it possible to change the elasticity depending on the size of a mesh which varies depending on the entanglement of the warp and the weft, the materials of the warp and the weft, or the like. When the base fabric 53 is used as the reinforcing member 51, it is possible to adjust the eccentricity followability of the diaphragm 23 by the elasticity of the base fabric 53.

### [Fifth embodiment]

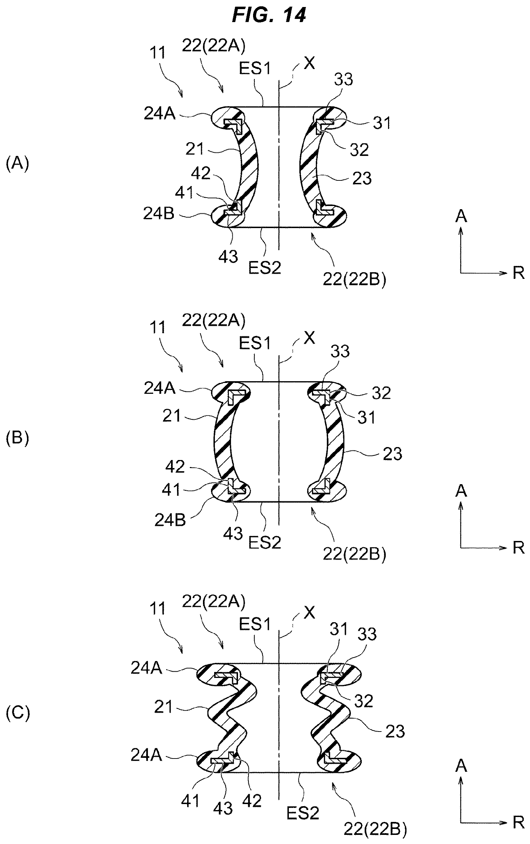

A fifth embodiment will be described with reference to FIGS. 14(A) to 14(C). The same parts as those of the first to third embodiments are denoted by the same reference numerals, and the description thereof will also be omitted.

### 1. Configuration of pipe connector

The diaphragms 23 according to the first to fourth embodiments each have the straight shape along the axial direction A. On the other hand, a diaphragm 23 in the present embodiment has a bent shape when viewed in a cross section. Three forms will be introduced as the shape of the bent diaphragm 23.

FIG. 14(A) is a schematic view illustrating an elastic body 21 having a diaphragm 23 of the first form. The diaphragm 23 has a central portion curved in a curved shape and having a shape smaller in diameter than both ends thereof.

FIG. 14(B) is a schematic view illustrating an elastic body 21 having a diaphragm 23 of the second form. The diaphragm 23 has a barrel shape whose central portion expands in a curved shape and has a shape larger in diameter than both ends thereof.

FIG. 14(C) is a schematic view illustrating an elastic body 21 having a diaphragm 23 of the third form. The diaphragm 23 has a bellows shape extending and contracting in the axial direction.

### 2. Pipe connection method using pipe connector

The diaphragms 23 of the first to third forms may be applied to any of the pipe connectors 11 of the first to third embodiments.

When any one of the diaphragms 23 of the first to third forms illustrated in FIGS. 14(A) to 14(C) is applied to the diaphragm 23 of the pipe connector 11 of the first embodiment, the connection direction of the two pipes 101 (101A, 101B) using the same follows the pipe connection method according to the first embodiment illustrated in FIGS. 3 and 4.

When any one of the diaphragms 23 of the first to third forms illustrated in FIGS. 14(A) to 14(C) is applied to the diaphragm 23 of the pipe connector 11 of the second embodiment, the connection direction of the two pipes 101 (101A, 101B) using the same follows the pipe connection method according to the second embodiment illustrated in FIG. 6.

When any one of the diaphragms 23 of the first to third forms illustrated in FIGS. 14(A) to 14(C) is applied to the diaphragm 23 of the pipe connector 11 of the third embodiment, the connection direction of the two pipes 101 (101A, 101B) using the same follows the pipe connection method according to the third embodiment illustrated in FIG. 8.

### 3. Action and effect

Since the diaphragms 23 of the first to third forms each have a bent shape when viewed in a cross section, the diaphragms 23 are easily deflected in both the axial direction A and the radial direction R. Therefore, it is possible to improve the eccentricity followability in both directions of the axial direction A and the radial direction R of the two pipes 101 (101A, 101B) to which the pipe connector 11 is connected.

### [Modifications]

The various embodiments have been described. In implementing them, any change or modification is possible without limitation to these various embodiments.

### Description of Reference Numerals

- 11: pipe connector
- 21: elastic body
- 22: connection portion
- 22A: connection portion (one connection portion)
- 22B: connection portion (other connection portion)
- 23: diaphragm
- 24A: seal
- 24B: seal
- 24C1: seal
- 24C2: seal
- 24D1: seal
- 24D2: seal
- 31: first reinforcing ring
- 32: first cylinder
- 33: first flange
- 41: second reinforcing ring
- 42: second cylinder
- 43: second flange
- 51: reinforcing member
- 52: coil spring
- 53: base fabric
- 101: pipe
- 101A: pipe (one pipe)
- 101B: pipe (other pipe)
- 201: first jig
- 211: second jig
- 221: jig
- d1, d2, d6: inner diameter
- d3 ~ d5, d7: outer diameter
- A: axial direction
- E1: end
- E2: end
- ES1: end surface
- ES2: end surface
- R: radial direction
- S1: step
- S2: step
- X: axis passing through center of pipe connector
- Y: axis passing through center of one pipe
- Z: axis passing through center of other pipe

## Claims

1. A pipe connector interposed between two pipes arranged in series facing each other in an axial direction and connecting the two pipes, comprising:
a rubber elastic body, which has connection portions respectively fitted to one of the pipes and the other pipe at both ends of the elastic body, and which has a cylindrical shape in which a flexible diaphragm is integrally provided between the two connection portions and has a seal sealing the pipe, which is integrally provided at the connection portion;
a first reinforcing ring which is embedded in one of the connection portions fitted to the one pipe and has a first cylinder and a first flange higher in rigidity than the elastic body; and
a second reinforcing ring which is embedded in the other connection portion fitted to the other pipe and has a second cylinder and an outward second flange higher in rigidity than the elastic body,
wherein the first flange receives a force of a jig in a direction from the other connection portion toward the one connection portion, and
wherein the second flange receives at an outer periphery of the elastic body, a force of a jig in a direction from the one connection portion toward the other connection portion.

2. The pipe connector according to Claim 1, wherein the first flange is an inward flange which receives an axial force of the jig inserted into the elastic body from the other connection portion.

3. The pipe connector according to Claim 2, wherein the first flange is provided at an end of the first cylinder which serves as a head in a fitting direction to the one pipe, and
wherein the one connection portion includes, on an outer peripheral surface of the one connection portion, the seal sealing an inner peripheral surface of the one pipe fitted to an outer periphery of the one connection portion.

4. The pipe connector according to Claim 2, wherein the first flange is provided at an end of the first cylinder which serves as a rear in a fitting direction to the one pipe, and
wherein the one connection portion includes, on an inner peripheral surface of the one connection portion, the seal sealing an outer peripheral surface of the one pipe fitted to an inner periphery of the one connection portion.

5. The pipe connector according to Claim 2, wherein the seal is disposed at either one or both of a position axially coincident with the first cylinder in an end surface of the one connection portion and a position axially coincident with the second cylinder in an end surface of the other connection portion.

6. The pipe connector according to Claim 2, wherein the seal is disposed in either one or both of a portion of the rubber covering the first flange, which faces the one pipe, and a portion of the rubber covering the second flange, which faces the other pipe.

7. The pipe connector according to Claim 2, wherein the diameter of a fitting portion of the one connection portion with respect to the one pipe coincides with the diameter of a fitting portion of the other connection portion with respect to the other pipe.

8. The pipe connector according to Claim 1, wherein the first flange is an outward flange which receives an axial force of a jig inserted into the diaphragm from a direction orthogonal to the axial direction.

9. The pipe connector according to Claim 8, wherein the first flange is provided at an end of the first cylinder which serves as a rear in a fitting direction to the one pipe, and
wherein the one connection portion includes, on an outer peripheral surface of the one connection portion, the seal sealing an inner peripheral surface of the one pipe fitted to an outer periphery of the one connection portion.

10. The pipe connector according to Claim 8, wherein the seal is disposed at either one or both of a position axially coincident with the first cylinder in an end surface of the one connection portion and a position axially coincident with the second cylinder in an end surface of the other connection portion.

11. The pipe connector according to Claim 8, wherein the seal is disposed in either one or both of a portion of the rubber covering the first flange, which faces the one pipe, and a portion of the rubber covering the second flange, which faces the other pipe.

12. The pipe connector according to Claim 8, wherein the diameter of a fitting portion of the one connection portion with respect to the one pipe coincides with the diameter of a fitting portion of the other connection portion with respect to the other pipe.

13. The pipe connector according to Claim 1, wherein a reinforcing member is embedded in the diaphragm.

14. The pipe connector according to Claim 13, wherein the reinforcing member is a coil spring which expands and contracts in the axial direction.

15. The pipe connector according to Claim 13, wherein the reinforcing member is a base fabric having a cylindrical shape.

16. The pipe connector according to Claim 1, wherein the diaphragm has a shape in which a central portion is smaller in diameter than both ends.

17. The pipe connector according to Claim 1, wherein the diaphragm has a shape in which a central portion is larger in diameter than both ends.

18. The pipe connector according to Claim 1, wherein the diaphragm has a bellows shape which expands and contracts in the axial direction.

19. A pipe connection method using a pipe connector according to any one of Claims 2 to 7, comprising:
preparing the pipe connector, and inserting a first jig having a diameter axially overlapping with the first flange into the elastic body from the other connection portion;
pushing the first jig in to pressurize the first flange in a state in which the one pipe and the one connection portion are aligned to be fitted to each other, and connecting the one pipe and the one connection portion;
removing the first jig;
inserting a second jig having a circular arc shape from a direction orthogonal to the axial direction with respect to the diaphragm of the elastic body;
pressurizing the second flange with the second jig in a state in which the other pipe and the other connection portion are aligned so as to be fitted to each other, and connecting the other pipe and the other connection portion; and
removing the second jig.

20. A pipe connection method using a pipe connector according to any one of Claims 8 to 12, comprising:
preparing the pipe connector, and inserting the jig having the circular arc shape from a direction orthogonal to the axial direction with respect to the diaphragm;
pressurizing the first flange with the jig in a state in which the one pipe and the one connection portion are aligned so as to be fitted to each other, and connecting the one pipe and the one connection portion;
pressurizing the second flange with the jig in a state in which the other pipe and the other connection portion are aligned so as to be fitted to each other, and connecting the other pipe and the other connection portion; and
removing the jig.
